# EUROPÄISCHE PATENTANMELDUNG

(11) **EP 4 378 354 A1**
(43) Veröffentlichungstag der Anmeldung: **05.06.2024**
(21) Anmeldenummer: 23209304.7
(22) Anmeldetag: 13.11.2023
(51) Int. Cl.: A47B 88/487, A47B 88/493

(54) **AUSZUGSFÜHRUNG**

(30) Priorität: 30.11.2022 DE 102022131797
(71) Anmelder: Paul Hettich GmbH & Co. KG, 32278 Kirchlengern (DE)
(72) Erfinder: LÖH, Andreas, 32278 Kirchlengern (DE); LESSMANN, Johann-Sebastian, 32584 Löhne (DE); KUHLMANN, Jürgen, 49326 Melle (DE)
(74) Vertreter: Dantz, Jan Henning

(57) **Zusammenfassung**

Eine Auszugsführung (1) umfasst mindestens zwei relativ zueinander bewegbare Schienen (2, 5), zwischen denen Wälzkörper (13) angeordnet sind, die an Laufbahnen an den Schienen (2, 5) abrollbar sind, wobei die Schienen (2, 5) in mindestens einer Position über mindestens eine Halteeinrichtung (9) lösbar fixierbar sind, wobei die Halteeinrichtung (9) einen integral mit einer der Schienen (2, 5) ausgebildeten Federsteg (10) umfasst, der durch mindestens einen der Wälzkörper (13) bewegbar ist. Dadurch kann die bewegbare Schiene mit einfachen Mitteln in einer vorbestimmten Position an der stationären Schiene gehalten werden.

## Beschreibung

Die vorliegende Erfindung betrifft eine Auszugsführung mit mindestens zwei relativ zueinander bewegbaren Schienen, zwischen denen Wälzkörper angeordnet sind, die an Laufbahnen an den Schienen abrollbar sind, wobei die Schienen in mindestens einer Position über eine Halteeinrichtung lösbar fixierbar sind.

Die DE 10 2012 210 001 A1 offenbart eine Schienenauszugsvorrichtung für ein Haushaltsgerät, bei der zwei Schienen relativ zueinander verschiebbar sind. Über eine Rastvorrichtung können die Schienen in einer Endstellung aneinander verrastet werden, wobei die Rastvorrichtung eine Rastprägung in Form eines Höckers umfasst, der von einem Wälzkörper in Form einer Kugel überfahren wird, um die Scheine zu verrasten. Durch eine solche Prägung können allerdings nur geringe Haltekräfte bereitgestellt werden, und es kann insbesondere zu einem Schlupf kommen, da die Wälzkörper mit Spiel zwischen den Schienen angeordnet sind. Zudem kann es durch die starre Prägung zu Verklemmungen kommen, wenn die Kugel ungünstig auf die Prägung aufläuft. Ein weiterer Nachteil liegt in dem recht hohen Verschleiß, und damit in der Abnahme der Rastkräfte bei einem nicht federnden Rastelement.

Es ist daher Aufgabe der vorliegenden Erfindung, eine Auszugsführung zu schaffen, die mit einfachen Mitteln eine lösbare Fixierung einer Schiene einer Auszugsführung ermöglicht.

Diese Aufgabe wird mit einer Auszugsführung mit den Merkmalen des Anspruches 1 gelöst.

Die erfindungsgemäße Auszugsführung weist mindestens zwei relativ zueinander bewegbare Schienen auf, zwischen denen Wälzkörper angeordnet sind, die an Laufbahnen an den Schienen abrollbar sind, wobei die Schienen in mindestens einer Position über eine Halteeinrichtung lösbar fixierbar sind, die einen integral mit einer der Schienen ausgebildeten Federsteg umfasst, der durch einen der Wälzkörper bewegbar ist. Dadurch kann der Wälzkörper über den Federsteg klemmend oder rastend fixiert werden, indem senkrecht zur Längsrichtung der Schienen Kräfte durch den Federsteg aufgebracht werden, die zum Halten der Schiene führen. Die Haltekräfte sind dabei durch die Klemmkräfte des bewegbaren, insbesondere biegbaren Federsteges vorgegeben, und eine Blockierung der Auszugsführung wird durch die elastische Ausgestaltung des Federsteges vermieden. Durch die integrale Ausbildung des Federsteges mit einer der Schienen werden keine zusätzlichen Bauteile für die lösbare Fixierung der Schiene benötigt.

Vorzugsweise ist durch den Federsteg der Wälzkörper klemmend oder rastend fixierbar. Der Wälzkörper kann wahlweise für eine Verrastung klemmend durch den Federsteg festgelegt werden oder den Federsteg in Bewegungsrichtung überfahren, so dass der Federsteg hinter dem Wälzkörper einrastet.

Bevorzugt ist der Federsteg benachbart zu einer Laufbahn für Wälzkörper angeordnet. Dadurch werden die jeweiligen Wälzkörper durch den Federsteg schräg zur Auszugsrichtung vorgespannt. Die Laufbahnen können dabei streifenförmig mit einem gebogenen Querschnitt ausgebildet sein. Der Federsteg rage zumindest teilweise in den Raum hinein, der von den Wälzkörpern durchfahren wird, so dass die lineare Bewegungsbahn der Wälzkörper durch den Kontakt mit dem Federsteg verändert wird.

Bevorzugt ist der Federsteg zwischen zwei Laufbahnen angeordnet, so dass dieser nahezu gleichzeitig von mindestens zwei Wälzkörpern bewegbar ist, die senkrecht zur Längsrichtung der Schiene an gegenüberliegenden Seiten des Federsteges angeordnet sind. Dadurch können mindestens zwei Wälzkörper in unterschiedliche Richtungen vorgespannt werden, was die Haltekräfte in der Rastposition erhöht. Die Wälzkörper können beispielsweise als Kugeln ausgebildet sein, die an bogenförmigen Laufbahnen geführt sind, so dass der Federsteg zwischen den zwei gebogenen Abschnitten vorgesehen werden kann, insbesondere an einem geraden Abschnitt der Schiene, der insbesondere an einer Oberseite der Schiene in der montierten Position angeordnet ist. In einer anderen Ausführungsform der Auszugsführung kann dieser gerade Abschnitt auch seitlich an der Schiene in der Montageposition angeordnet sein.

Es ist für hohe Haltekräfte vorteilhaft, wenn die Halteeinrichtung in einer Halteposition mehr als einen Federsteg umfasst. Dabei kann ein erster Federsteg an einer ersten Seite der Schienen, beispielsweise einer Oberseite, und ein zweiter Federsteg an einer zweiten Seite der Schienen, beispielsweise seitlich, angeordnet ist. Die beide Federstege sind vorteilhaft so angeordnet, dass sie Haltekräfte auf denselben Wälzkörper, bevorzugt dieselbe Kugel, ausüben.

Der Federsteg ist bevorzugt durch einen im Wesentlichen U-förmigen Schlitz umgeben. Dabei können die Schenkel des im Wesentlichen U-förmigen Schlitzes zumindest teilweise parallel zu einer Längsrichtung der Schiene ausgebildet sein, wobei zwischen den freien Enden der Schenkel des Schlitzes ein Verbindungsbereich zu der Schiene ausgebildet ist. Bevorzugt weisen die Schenkel des U-förmigen Schlitzes einen winklig zur Längsrichtung ausgebildeten Bereich auf, so dass die Wälzkörper beim Verfahren in Längsrichtung seitlich vorgespannt werden. Ein freies Ende des Federsteges ist bevorzugt breiter ausgebildet als ein Verbindungsbereich zu der Schiene. Dadurch können die Wälzkörper über den Federsteg nach außen gedrückt werden, wenn diese sich in Längsrichtung bewegen.

Der Federsteg steht vorzugsweise in einen Innenraum zwischen den Schienen hervor. Dadurch ist sichergestellt, dass die Wälzkörper bei Erreichen des Federsteges diesen kontaktieren und elastisch verformen. Der Federsteg kann dabei durch Stanzen und Biegen oder in sonstigen Verfahren zur Bearbeitung eines Metallbleches hergestellt werden, aus dem die Schiene gebildet wird.

An der Auszugsführung können zwei in Längsrichtung der Schiene beabstandete Halteeinrichtungen mit jeweils einem integral ausgebildeten Federsteg zur Fixierung einer der Schienen in unterschiedlichen Positionen vorgesehen sein. Bevorzugt ist die verfahrbare Schiene mit einem oder mehreren Federstegen versehen, um diese in unterschiedlichen Positionen entlang der stationären Schiene verrasten zu können. Alternativ können die Federstege aber auch an der stationären Schiene ausgebildet sein. Zudem kann die Auszugsführung statt zwei Schienen auch mehr als zwei Schienen umfassen, insbesondere kann eine auszugsverlängernde Mittelschiene zwischen zwei Schienen vorgesehen werden, auf welche jeweils mindestens eine Halteeinrichtung der benachbarten Schienen wirkt.

Der Federsteg kann optional ausschließlich eine Oberfläche der Wälzkörperkontaktieren. Alternativ kann der Federsteg in einer Halteposition zusätzlich auch einen Wälzkörperkäfig zum Halten der Wälzkörper klemmend gegen die andere Schiene drücken und diesen klemmend zwischen den Schienen festlegen. Dadurch können die Haltekräfte erhöhte werden, da die Reibkräfte ein Halten der bewegbaren Schiene bewirken.

Die Auszugsführung wird vorzugsweise bei Möbeln, beispielsweise bei Schubkästen oder Tablarauszügen, oder bei Haushaltsgeräten, insbesondere bei Backöfen, eingesetzt. Dabei kann die Auszugsführung an einem Seitengitter des Backofens fixiert werden, um in einer herausgezogenen Position über die Halteeinrichtung gehalten zu werden.

Die Erfindung wird nachfolgend anhand eines Ausführungsbeispiels mit Bezug auf die beigefügten Zeichnungen näher erläutert. Es zeigen:

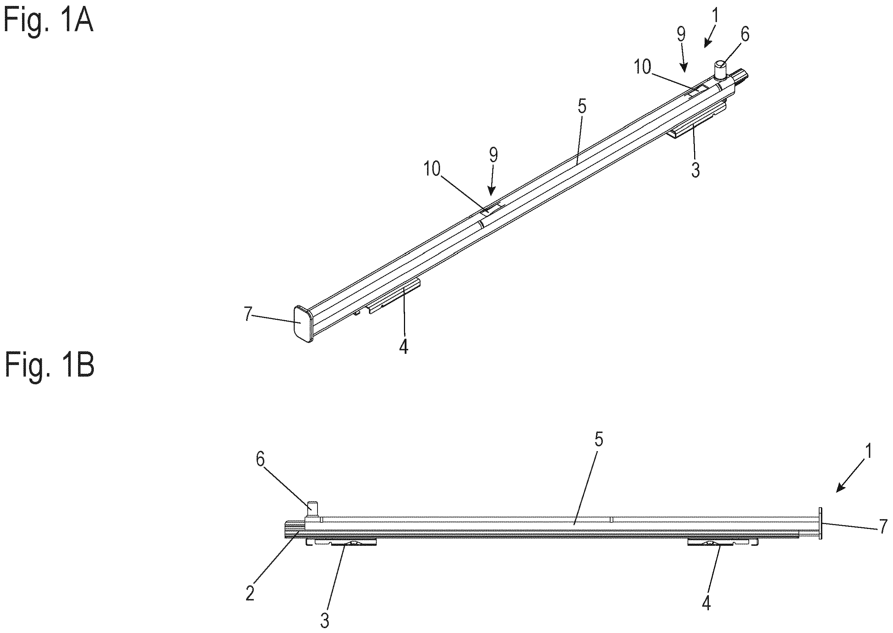

- Figuren 1A und 1B: zwei Ansichten einer Auszugsführung in einer nahezu eingefahrenen Position;
- Figuren 2A und 2B: zwei Ansichten der Auszugsführung in einer ausgefahrenen Position;
- Figur 3: eine Draufsicht auf die Auszugsführung der Figur 1, und
- Figur 4: eine Schnittansicht durch die Halteeinrichtung der Auszugsführung.

Eine Auszugsführung 1 umfasst eine stationäre Schiene 2, die über einen vorderen Halter 4 und einen hinteren Halter 3 an einer Strebe eines Seitengitters fixierbar ist. Dadurch kann die Auszugsführung 1 an einem Seitengitter in einem Backofen montiert werden. Die Auszugsführung 1 kann auch an anderer Position, auf andere Art und Weise oder aber auch an Möbeln oder anderen Haushaltsgeräten montiert werden.

An der stationären Schiene 2 ist eine verfahrbare Schiene 5 bewegbar gelagert, die optional an einer vorderen Stirnseite eine Platte 7 aufweist und einen hinteren Bolzen 6. Anstelle eines Bolzens 6 oder einer Platte 7 können auch Anschläge und/oder Stopfen vorhanden sein. Die Begriffe "vorne" und "hinten" beziehen sich dabei auf die Auszugsrichtung der verfahrbaren Schiene 5.

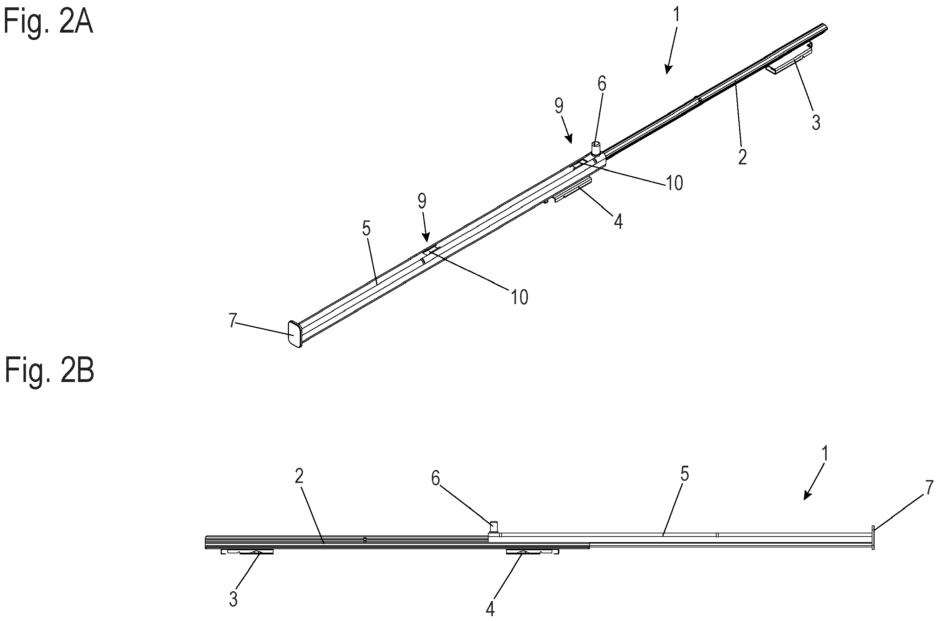

Um die verfahrbare Schiene 5 in zwei unterschiedlichen Positionen lösbar fixieren zu können, sind zwei Halteeinrichtungen 9 vorgesehen, die jeweils einen integral mit der Schiene 5 ausgebildeten biegbaren Federsteg 10 umfassen. In der eingefahrenen Position ist die Schiene 5 dabei an der Halteeinrichtung 9 im mittleren Bereich der Schiene 5 fixiert, während die Schiene 5 in einer ausgefahrenen Position an der Halteeinrichtung 9 benachbart zu dem Bolzen 6 fixiert ist, wobei die ausgefahrene Position der Auszugsführung 1 in den Figuren 2A und 2B dargestellt ist.

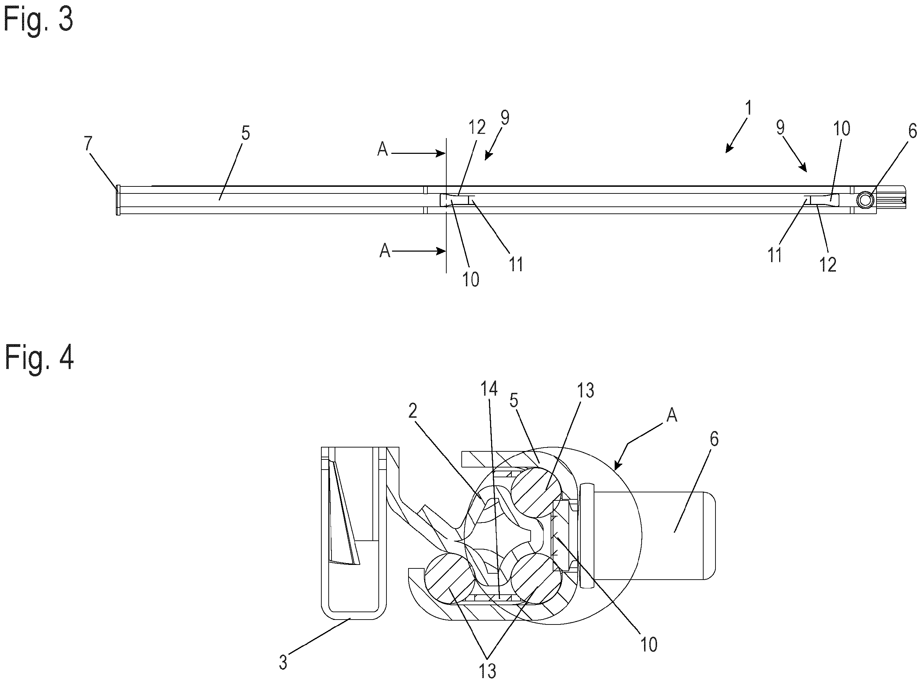

In Figur 3 ist eine Draufsicht auf die Auszugsführung 1 in der eingefahrenen Position gezeigt. Es ist erkennbar, dass an einer Oberseite der Schiene 5 zwei biegbare Federstege 10 ausgebildet sind, die von einem U-förmigen Schlitz umgeben sind, wobei zwischen den beiden Schenkeln des U ein Verbindungssteg 11 mit der Schiene 5 ausgebildet ist. Der Federsteg 10 kann eine Länge in Längsrichtung der Schiene 5 von beispielsweise 5 mm bis 150 mm, insbesondere 8 mm bis 50 mm, besitzen. Dabei sind die beiden Schenkel des U-förmigen Schlitzes 12 in einem Bereich benachbart zu dem Verbindungssteg 11 parallel zur Längsrichtung ausgerichtet und spreizen in einem Bereich benachbart zu dem freien Ende des Federsteges 10 auf. Das freie Ende des Federsteges 10 ist somit breiter ausgebildet als der Verbindungssteg 11.

In Figur 4 ist eine Schnittansicht durch die Halteeinrichtung 9 in dem mittleren Bereich gezeigt. Der Federsteg 10 steht in den Innenraum zwischen den Schienen 2 und 5 hervor und ist zwischen zwei Wälzkörpern 13 angeordnet, die als Kugeln ausgebildet sind. Die Wälzkörper 13 rollen an bogenförmigen Laufbahnen an den Schienen 2 und 5 ab, wobei der Federsteg 10 an einem geraden Übergangsbereich zwischen zwei Laufbahnen angeordnet ist. Durch den Federsteg 10 werden zwei Wälzkörper 13 nahezu gleichzeitig verspannt, wenn der Federsteg 10 durch die Wälzkörper 13 nach außen bewegt wird. Dadurch ergeben sich durch Klemmen oder Rasten Haltekräfte für die verfahrbare Schiene 5 in der Rastposition, die erst überwunden werden müssen, bevor die Schiene 5 in die eingefahrene oder ausgefahrene Position bewegt wird.

In Figur 4 sind in einer Ebene senkrecht zur Längsrichtung drei Wälzkörper 13 angeordnet und über einen Wälzkörperkäfig 14 gehalten. Es ist natürlich auch möglich, nur zwei Wälzkörper 13 oder mehr als drei Wälzkörper 13 in einer Ebene vorzugsehen. Zudem können statt kugelförmiger Wälzkörper 13 auch andere Wälzkörper in Form von Tonnen, Zylindern oder Nadeln eingesetzt werden, um eine Verrastung über einen Federsteg 10 zu bewirken.

### Bezugszeichenliste

- 1: Auszugsführung
- 2: Schiene
- 3: Halter
- 4: Halter
- 5: Schiene
- 6: Bolzen
- 7: Platte
- 9: Halteeinrichtung
- 10: Federsteg
- 11: Verbindungssteg
- 12: Schlitz
- 13: Wälzkörper
- 14: Wälzkörperkäfig

## Patentansprüche

1. Auszugsführung (1) mit mindestens zwei relativ zueinander bewegbaren Schienen (2, 5), zwischen denen Wälzkörper (13) angeordnet sind, die an Laufbahnen an den Schienen (2, 5) abrollbar sind, wobei die Schienen (2, 5) in mindestens einer Position über eine Halteeinrichtung (9) lösbar fixierbar sind, **dadurch gekennzeichnet, dass** die Halteeinrichtung (9) einen integral mit einer der Schienen (2, 5) ausgebildeten Federsteg (10) umfasst, der durch mindestens einen der Wälzkörper (13) bewegbar ist.

2. Auszugsführung nach Anspruch 1, **dadurch gekennzeichnet, dass** durch den Federsteg (10) der mindestens eine Wälzkörper (13) klemmend oder rastend fixierbar ist.

3. Auszugsführung nach Anspruch 1 oder 2, **dadurch gekennzeichnet, dass** der Federsteg (10) benachbart zu einer Laufbahn der Wälzkörper (13) angeordnet ist.

4. Auszugsführung nach einem der vorhergehenden Ansprüche, **dadurch gekennzeichnet, dass** der Federsteg (10) zwischen zwei Laufbahnen angeordnet ist und nahezu gleichzeitig von zwei Wälzkörpern (13) bewegbar ist.

5. Auszugsführung nach einem der vorhergehenden Ansprüche, **dadurch gekennzeichnet, dass** der Federsteg (10) durch einen im Wesentlichen U-förmigen Schlitz (12) umgeben ist.

6. Auszugsführung nach Anspruch 5, **dadurch gekennzeichnet, dass** die Schenkel des im Wesentlichen U-förmigen Schlitzes (12) zumindest teilweise parallel zu einer Längsrichtung der Schiene (5) ausgebildet sind.

7. Auszugsführung nach Anspruch 5 oder 6, **dadurch gekennzeichnet, dass** die Schenkel des U-förmigen Schlitzes (12) zumindest teilweise winklig zur Längsrichtung der Schiene (5) ausgebildet sind.

8. Auszugsführung nach einem der vorhergehenden Ansprüche, **dadurch gekennzeichnet, dass** der Federsteg (10) in einen Innenraum zwischen den Schienen (2, 5) hervorsteht.

9. Auszugsführung nach einem der vorhergehenden Ansprüche, **dadurch gekennzeichnet, dass** die Halteeinrichtung (9) in einer Halteposition mehr als einen Federsteg (10) umfasst, wobei ein erster Federsteg (10) an einer ersten Seite der Schienen (2, 5) und ein zweiter Federsteg (10) an einer zweiten Seite der Schienen (2, 5) angeordnet ist.

10. Auszugsführung nach einem der vorhergehenden Ansprüche, **dadurch gekennzeichnet, dass** das zwei voneinander in Längsrichtung der Schienen (2, 5) beabstandete Halteeinrichtungen (9) mit jeweils einem integral ausgebildeten Federsteg (10) zur Verrastung einer Schiene (2, 5) in unterschiedlichen Positionen vorgesehen sind.

11. Backofen, insbesondere mit einem Seitengitter, in dem eine Auszugsführung (1) nach einem der vorhergehenden Ansprüche fixiert ist.
